(19) Europäisches Patentamt
European Patent Office
Office européen des brevets

(11) **EP 3 987 143 B1**

(12) **EUROPEAN PATENT SPECIFICATION**

(45) Date of publication and mention
of the grant of the patent:
**02.04.2025 Bulletin 2025/14**

(21) Application number: **20736778.0**

(22) Date of filing: **18.06.2020**

(51) International Patent Classification (IPC):
**E06B 3/677** (2006.01)    **E06B 3/66** (2006.01)

(52) Cooperative Patent Classification (CPC):
**E06B 3/677; E06B 3/6612;** Y02A 30/249;
Y02B 80/22

(86) International application number:
**PCT/IB2020/055734**

(87) International publication number:
**WO 2020/255032 (24.12.2020 Gazette 2020/52)**

(54) **FLANGED TUBE FOR VACUUM INSULATED GLASS (VIG) UNIT EVACUATION AND HERMETIC SEALING, VIG UNIT INCLUDING FLANGED TUBE, AND ASSOCIATED METHODS**

FLANSCHROHR ZUR EVAKUIERUNG UND HERMETISCHEN ABDICHTUNG EINER VAKUUMISOLIERTEN GLASEINHEIT (VIG), VIG-EINHEIT MIT INTERNEM FLANSCHROHR UND ZUGEHÖRIGE VERFAHREN

TUBE À BRIDES POUR ÉVACUATION ET SCELLAGE HERMÉTIQUE D'UNITÉ DE VERRE ISOLÉ SOUS VIDE (VIG), UNITÉ DE VERRE ISOLÉ SOUS VIDE (VIG) COMPRENANT UN TUBE À BRIDES ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2019 US 201916444728**

(43) Date of publication of application:
**27.04.2022 Bulletin 2022/17**

(73) Proprietor: **Guardian Glass, LLC
Auburn Hills MI 48326 (US)**

(72) Inventors:
• **HOGAN, John**
  **Auburn Hills, Michigan 48326 (US)**
• **HODAPP, Timothy**
  **Auburn Hills, Michigan 48326 (US)**
• **PASIONEK, Bradley**
  **Auburn Hills, Michigan 48326 (US)**

(74) Representative: **Hoyng Rokh Monegier B.V.
Rembrandt Tower, 30th Floor
Amstelplein 1
1096 HA Amsterdam (NL)**

(56) References cited:
**EP-A1- 3 363 982      EP-B1- 3 363 982
US-A- 2 749 579      US-A- 5 902 652**

## Description

TECHNICAL FIELD

The present invention relates to a VIG unit made using a flanged pump-out tube, and associated methods.

BACKGROUND AND SUMMARY

Vacuum insulating glass (VIG) units typically include at least two spaced apart glass substrates that enclose an evacuated or low-pressure space/cavity therebetween. The substrates are interconnected by a peripheral edge seal and typically include spacers between the glass substrates to maintain spacing between the glass substrates and to avoid collapse of the glass substrates that may be caused due to the low pressure environment that exists between the substrates. Some example VIG configurations are disclosed, for example, in U.S. Patent Nos. 5,657,607, 5,664,395, 5,902,652, 6,506,472 and 6,383,580.

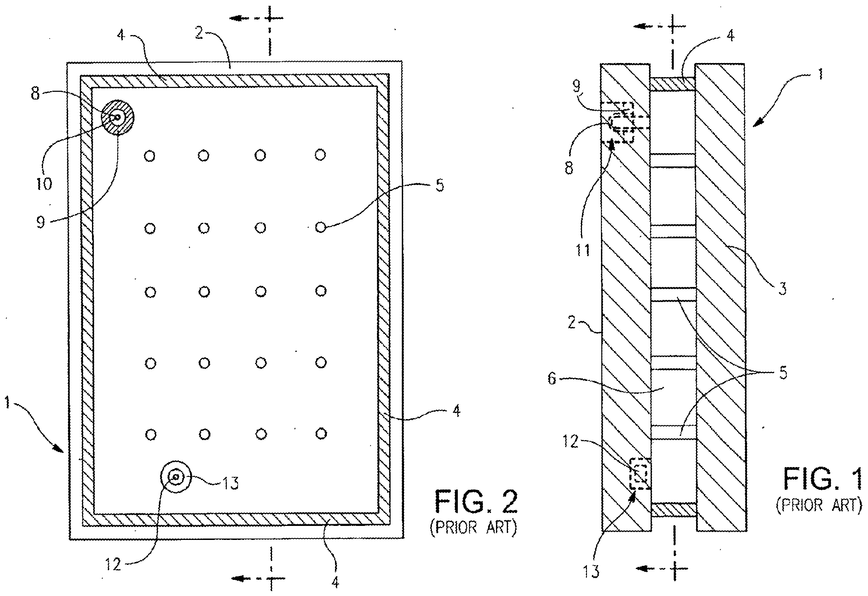

Figs. 1-2 illustrate a typical VIG unit 1 and elements that form the VIG unit 1. For example, VIG unit 1 may include two spaced apart substantially parallel glass substrates 2, 3, which enclose an evacuated low-pressure space/cavity 6 therebetween. Glass sheets or substrates 2,3 are interconnected by a peripheral edge seal 4 which may be made of fused solder glass, for example. An array of support pillars/spacers 5 may be included between the glass substrates 2, 3 to maintain the spacing of substrates 2, 3 of the VIG unit 1 in view of the low-pressure space/gap 6 present between the substrates 2, 3.

A pump-out tube 8 may be hermetically sealed by, for example, solder glass 9 to an aperture/hole 10 that passes from an interior surface of one of the glass substrates 2 to the bottom of an optional recess 11 in the exterior surface of the glass substrate 2, or optionally to the exterior surface of the glass substrate 2. A vacuum is attached to pump-out tube 8 to evacuate the interior cavity 6 to a low pressure, for example, using a sequential pump down operation. After evacuation of the cavity 6, a portion (e.g., the tip) of the tube 8 is melted to seal the vacuum in low pressure cavity/space 6. The optional recess 11 may retain the sealed pump-out tube 8. Optionally, a chemical getter 12 may be included within a recess 13 that is disposed in an interior face of one of the glass substrates, e.g., glass substrate 2. The chemical getter 12 may be used to absorb or bind with certain residual impurities that may remain after the cavity 6 is evacuated and sealed.

VIG units with fused solder glass peripheral edge seals 4 are typically manufactured by depositing glass frit, in a solution (e.g., frit paste), around the periphery of substrate 2 (or on substrate 3). This glass frit paste ultimately forms the glass solder edge seal 4. The other substrate (e.g., 3) is brought down on substrate 2 so as to sandwich spacers/pillars 5 and the glass frit solution between the two substrates 2, 3. The entire assembly including the glass substrates 2, 3, the spacers/pillars 5 and the seal material (e.g., glass frit in solution or paste), is then heated to a temperature of at least about 500 degrees C, at which point the glass frit melts, wets the surfaces of the glass substrates 2, 3, and ultimately forms a hermetic peripheral/edge seal 4.

After formation of the edge seal 4 between the substrates, a vacuum is drawn via the pump-out tube 8 to form low pressure space/cavity 6 between the substrates 2, 3. The pressure in space 6 may be produced by way of an evacuation process to a level below atmospheric pressure, e.g., below about $10^{-2}$ Torr. To maintain the low pressure in the space/cavity 6, substrates 2, 3 are hermetically sealed. Small, high strength spacers/pillars 5 are provided between the substrates to maintain separation of the approximately parallel substrates against atmospheric pressure. As noted above, once the space 6 between substrates 2, 3 is evacuated, the pump-out tube 8 may be sealed, for example, by melting its tip using a laser or the like.

A typical process for installing the pump-out tube 8 in the hole or aperture 10 includes inserting a pre-formed glass pump-out tube 8 in an aperture/hole 10 that has previously been formed (e.g., by drilling) in one of the glass substrates 2. After the pump-out tube 8 has been seated in the aperture/hole 10, an adhesive frit paste is applied to the pump-out tube 8, typically in a region close to the opening of the hole 10 proximate an exterior surface of the glass substrate 2. As noted above, the pump-out tube may be sealed after evacuation or purging of the VIG unit cavity.

After evacuation of the cavity to a pressure less than atmospheric, sealing of the pump-out tube may be accomplished by heating an end of the pump-out tube that is used to evacuate or purge the cavity to melt the opening and thus seal the cavity of the VIG unit. For example and without limitation, this heating and melting may be accomplished by laser irradiation of the tip of the pump-out tube.

It sometimes may be the case that the pump-out tube may not be properly seated in the hole formed in the glass substrate. As a result, the pump-out tube may lean or tilt to one side, and thus not be substantially perpendicular to the surface of the glass substrate in which the hole is formed. As a result, in situations where the pump-out tube is improperly seated and is at an undesirable angle with respect to the surface of the glass substrate, it can become difficult to properly seal the pump-out tube because the laser cannot consistently melt the tip of the pump-out tube because of, for example, differences in distance between various portions of the angled pump-out tube top and the laser source. Inconsistent melting of the top of the pump-out tube may result in incomplete sealing and thus air leakage, which may, depending on the quality of the seal, occur rapidly or more slowly over time. In addition, based on the degree of tilt or tipping of the tube, the laser could hit the tube wall instead of the top. If the laser hits the tube wall, the laser could potentially bypass the tube and hit the frit, which may damage the frit or cause undesirable outgassing into the cavity.

It would seem desirable to provide a way to seat the pump-out tube in the hole to reduce the amount of tipping of the tube to be within an acceptable range. In this regard, attempts have been made to improve the evacuation and/or tip-off processes. See, for example, U.S. Patent Nos. 9,371,683 and 8,833,105, as well as U.S. Publication No. 2013/0306222. Such techniques are advantageous compared to conventional approaches. Yet the inventors of the instant application have recognized that further improvements are still possible.

For example, even when pump-out tubes are properly oriented with respect to the substrate, they still protrude outwardly from an outmost surface of the VIG unit. If the sealed tube is jostled, knocked loose, or broken in whole or in part, the VIG unit may lose vacuum faster than otherwise would be desirable. Caps sometimes are provided over protruding sealed tubes to help protect against shocks that might cause breakage and the like, but such caps have a limited effectiveness against heavy mechanical forces and add additional processing steps and materials to the VIG unit manufacturing process.

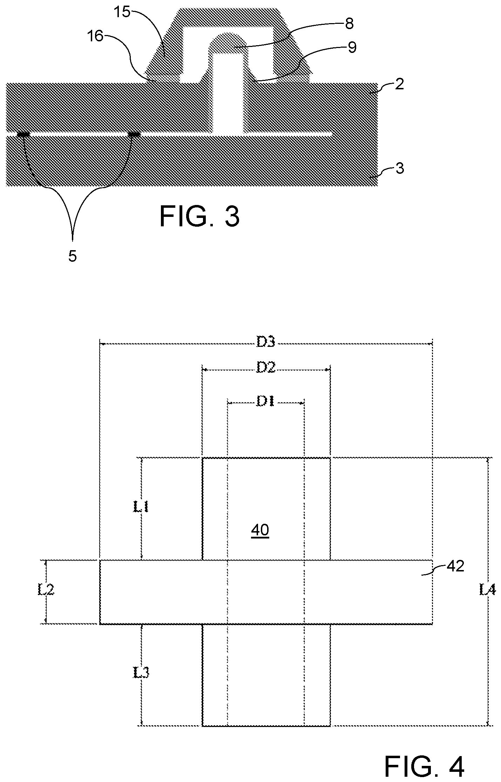

This conventional arrangement is shown more fully in Fig. 3, which is a cross-sectional schematic view of a VIG unit having a sealed pump-out tube 8 that protrudes outwardly from the VIG unit and is protected using a cap 15. When evacuating and subsequently sealing the VIG unit, the pump-out port is used to allow an evacuation path. Conventionally, this port is sealed by inserting a tube 8 with frit 9 applied thereon into a hole drilled in the glass 2, firing the frit 9 around the hole, sealing the frit 9 in place, and sealing the tube 8 by melting it with a laser, resistive filament, or similar focused energy source, thereby hermetically sealing the VIG unit. A protective cap 15 is attached to the glass surface via adhesive tape 16 or other means to help protect the delicate tube 8 that protrudes from the glass surface.

Thus, it will be appreciated that it would be desirable to completely eliminate the need for a pump-out tube that protrudes outwardly from an outmost surface of the VIG unit and/or the cap therefor.

EP3363982A1 discloses a method or producing a VIG unit produced by means of the method and a bonded assembly for providing to an evacuation hole in a glass pane of a VIG unit, wherein one of the substrates is provided with a stepped evacuation hole and the pump out tube is provided with a protruding flange made of solder glass. The flange is melted in order to fix and seal the pump out tube in the evacuating hole.

The invention is set out in the appended set of claims.

In a VIG according to the invention, there is no need for a pump-out tube that protrudes outwardly from an outmost surface of the VIG unit. This arrangement simplifies the manufacturing process, e.g., by removing the need to provide and seal a separate cap, making shipping, handling, transportation, and/or other processing operations easier because less care has to be taken by virtue of the elimination of a critical through very fragile element of the VIG unit. Frame design, lamination, IG construction, and/or the like also can be simplified.

The method of the present invention includes the step of sealing of the flanged pump-out tube such that the sealed tube does not protrude past an outermost surface of (e.g., is flush with or lies within) the VIG unit. This arrangement is advantageous because it can reduce and sometimes eliminate the need for a separate protruding protective cap placed above the tube. The removal of the protective cap, in turn, can be advantageous from an aesthetic perspective. Moreover, the removal of the protective cap can be advantageous in terms of reducing the likelihood of damage to the VIG unit and making shipping, handling, transportation, and/or other processing operations easier. With respect to the former, as alluded to above, bumping the cap can translate force to the sealed tube, which can cause it to move and/or break, compromising the quality of the vacuum of the VIG. With respect to the latter, because the cap is missing, it may be possible to avoid having to use special shipping and/or packaging materials that accommodate such caps.

The method of the present invention involves a redesigned VIG pump-out port and/or tube. The redesigned VIG pump-out port and/or tube advantageously improve vulnerabilities related to shearing loads and/or the like, e.g., by virtue of the elimination of a tube extending beyond an outermost plane of the VIG unit.

According to the present invention, a method of making a VIG uni according to claim 1 is provided.

According to the invention, a VIG unit made by the method of claim 1 is provided.

The features, aspects, advantages, and example embodiments described herein may be combined to realize yet further embodiments.

BRIEF DESCRIPTION OF THE DRAWINGS

These and other features and advantages may be better and more completely understood by reference to the following detailed description of exemplary illustrative embodiments in conjunction with the drawings, of which:

FIGURE 1 is a cross-sectional schematic diagram of a conventional vacuum insulated glass (VIG) unit;
FIGURE 2 is a top plan view of a conventional VIG unit;
FIGURE 3 is a cross-sectional schematic view of a VIG unit having a sealed pump-out tube that protrudes outwardly from the VIG unit and is protected using a cap;
FIGURE 4 is a cross-sectional schematic view of a flanged tube that may be used in certain example embodiments according to the invention,

FIGURE 5 is a cross-sectional schematic view showing an example substrate design that may be used in certain example embodiments according to the invention;

FIGURE 6 is a cross-sectional schematic view demonstrating a first way in which a flanged pump-out tube can be provided to a VIG unit subassembly to be sealed, in accordance with certain example embodiments according to the invention;

FIGURE 7 is a cross-sectional schematic view showing the Fig. 6 example VIG unit subassembly sealed in accordance with certain example embodiments according to the invention;

FIGURE 8 is a cross-sectional schematic view demonstrating a second way in which a flanged pump-out tube can be provided to a VIG unit subassembly to be sealed, in accordance with certain example embodiments that are not part of the present invention;

FIGURE 9 is a cross-sectional schematic view showing the Fig. 8 example VIG unit subassembly sealed in accordance with certain example embodiments that are not part of the present invention;

FIGURE 10 is a cross-sectional schematic view showing an example VIG unit subassembly lacking a top pocket that has been sealed in accordance with certain example embodiments that are not part of the present invention;

FIGURE 11 is a cross-sectional schematic view showing an example VIG unit subassembly with top and bottom pockets that has been sealed in accordance with certain example embodiments that are not part of the present invention;

FIGURE 12 is a flowchart showing an example process for making a VIG unit in connection with a flanged pump-out tube, in accordance with certain example embodiments; and

FIGURE 13 is a flowchart showing another example process for making a VIG unit in connection with an internal seal, in accordance with certain example embodiments.

DETAILED DESCRIPTION

The invention relates to improved techniques for evacuating vacuum insulated glass (VIG) units. More particularly, this invention relates to a flanged pump-out tube for VIG unit evacuation and hermetic sealing, a VIG unit subassembly including a flanged pump-out tube, a VIG unit made using a flanged pump-out tube, and/or associated methods. Typically, the internal space of a VIG unit is evacuated through a surface mounted tube or other structure that facilitates sealing once the internal space reaches sufficiently low pressures. That tube or other structure protrudes from the surface even when sealed and typically is protected with a protective cap but nonetheless oftentimes requires special handling. This invention improves upon this approach by using a flanged sealing tube that is tipped off so that an upper part thereof does not protrude beyond an outermost surface of the VIG unit, thereby potentially eliminating the need for a protective cap and allowing for more freedom in handling, frame design, hybrid VIG construction, lamination, and the like. In essence, the flanged sealing tube is relocated to an internal surface within a recessed pocket, at least in certain example embodiments.

According to the invention, the sealed tube is flush with, or recessed with respect to, the outer surface of the glass of the VIG. As a result, a protective cap need not be applied thereover. This in turn can lead to easier processing, especially for secondary processes such as lamination, hybrid VIG manufacturing, etc. Additionally, the elimination of an external tube that protrudes outwardly from the substrate may allow for improvements to be realized in shipping approaches, e.g., as additional packing dunnage to properly space apart the VIG units to account for the extra protrusion need not be provided. Standard, or more standard, packaging and the like may be used in certain example embodiments.

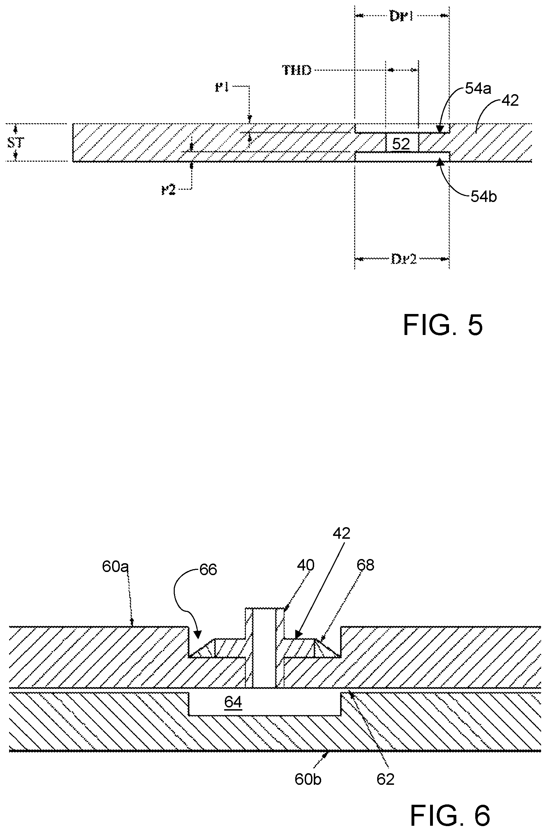

There are multiple flanged tube and substrate pocket designs that may be used in connection with different example embodiments. In this regard, and referring now more particularly to the drawings in which like numerals indicate like components throughout the several views, Fig. 4 is a cross-sectional schematic view of a flanged tube that may be used in certain example embodiments, and Fig. 5 is a cross-sectional schematic view showing an example substrate design that may be used in certain example embodiments.

The Fig. 4 example flange includes a cylindrical or other hollow-shaped tube 40, with a skirt 42 somewhere along its total length L4. In the Fig. 4 example, the tube 40 has an inner diameter or inner distance D1 and an outer diameter or outer distance D2, with the walls of the tube being defined therebetween. Also in the Fig. 4 example, the skirt 42 is intermediate upper and lower ends of the tube 40, e.g., so that it spaced a first distance L1 from an upper end of the tube 40 and spaced a second distance L3 from a lower end of the tube 40, with a length or thickness of L2. The skirt 42 has a diameter or major distance D3.

This skirt 42 acts as a flange, providing several potential processing improvements along with product improvements, as will be appreciated more fully from the description provided below. The tube 40 is formed as one piece in certain example embodiments. For instance, in certain example embodiments, the body of the tube 40 and the protruding feature 42 both are formed form the same material (e.g., glass). In certain example embodiments, the tube 40 and the skirt 42 may be considered integral with one another even though they are formed from different materials.

The tube 40 is inserted into a hole or pocket feature formed in a glass substrate that is, or will become, part of a VIG unit subassembly. The tube 40 is hermetically sealed to the glass substrate in this hole or pocket using a frit. Fig. 5 shows a substrate 50 with a pump-out port 52. Recesses 54a-54b are formed proximate to the pump-out port 52. The pump-out port 52 and recesses 54a-54b may be cylindrical or otherwise shaped. As shown in Fig. 5, the pump-out port 52 has a through diameter or major distance THD, and the recesses 54a-54b have diameters or distances of DP1 and DP2 respectively. The substrate has a thickness ST, and the recesses 54a-54b have depths of P1 and P2 respectively. As explained in greater detail below, different embodiments may include the upper recess 54a, the lower recess 54b, or both recesses 54a-54b.

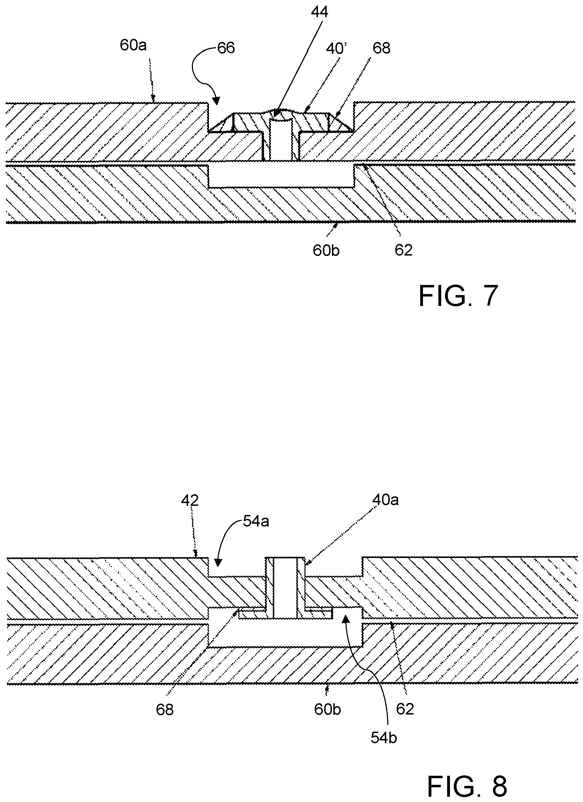

Sealing frit can be applied along the outermost diameter of the tube (e.g., as shown in Fig. 6) and/or applied between a top or bottom surface of the flange diameter between D2 and D3 and the surface of the pocket (e.g., see Fig. 8, showing frit on the top surface). The flange feature allows for the sealing frit to be covered with respect to the laser used in sealing the tube (as in the Fig. 8 example, for instance), and/or moved out of the way of the laser path (as in the Fig. 6 example, for instance). Locating the frit away from, and/or in place shielded with respect to, the laser can be advantageous, as laser exposure of the frit can promote defects in the seal, problems with the tube sealing, the buildup of fog, and/or other issues with the processing of the VIG units.

The flange feature acts as a vertical stop and helps maintain the perpendicular or substantially perpendicular relation between the tube end and the surface of the glass.

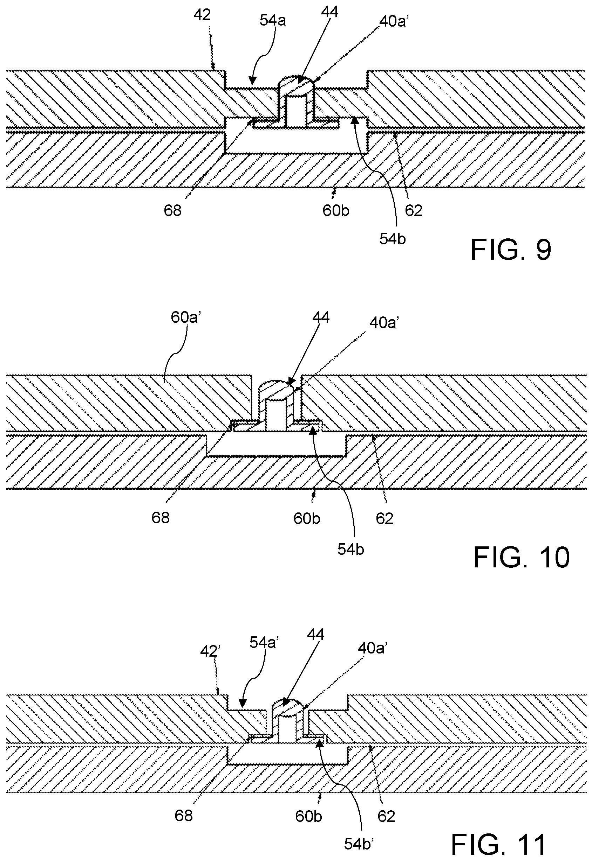

When the flange is provided on the interior VIG unit surface, in an embodiment that is not part of the present invention, a thermal break may be provided. This thermal break advantageously allows for proper sealing of the tube. As a result, a clearance may be provided between the substrate through-hole diameter or distance THD and the outer tube diameter or distance D2. See, for example, Figs. 10-11 in this regard. This clearance can be near zero, up to within about 1 mm of the outer diameter or distance D3 of the tube assembly. The bottom pocket promotes centering of the tube. Although not necessarily required for sealing in this arrangement, a top pocket nonetheless may be desirable for inspection or other purposes.

The flange feature, if used as a datum from the exterior pocket surface, allows a VBZ-based (vanadium, barium, and zinc based) or other frit to be used in both the edge-sealing and tube connection processes. This advantageously allows one common material to be used in multiple locations. Example VBZ-based and/or other frits that may be used in connection with certain example embodiments are disclosed in U.S. Patent Nos. 10,125,045; 9,988,302; 9,593,527; 9,428,952; and 9,309,146.

The flange feature, if used as a datum on the interior pocket surface (e.g., surface 2 or surface 3 of the resulting VIG unit), allows for firing of the tube during tempering, utilizing a bismuth or other frit seal, reducing the vulnerability to condensed water to which some VBZ-based and/or other frits are susceptible.

Lengths L1 and L3 are not required to be symmetrical and can be zero values (e.g., as shown in Fig. 8, where L3 = 0.00 mm). If L1 and L3 are symmetrical, however, installation operations may be facilitated through easier and more reliable orientation of the tube vis-à-vis the pump-out port.

In certain example embodiments, the thickness L2 of the skirt or protruding feature can range from 0.30 mm up to one half of the substrate thickness ST, less the thickness remaining from the sealing operation (which is typically up to 0.75 mm). In certain example embodiments where it is desirable to heat treat (e.g., thermally temper) the substrate that is to accommodate the flanged pump-out tube, the total glass possible to remove in the pocket depths P1 and P2 is up to one half the total thickness of the substrate. Removal of more glass may be incompatible with high-temperature tempering or the like in some instances. Thus, in certain example embodiments:

$$L2 = \{0.30 \text{ mm to } [(ST/2) - 0.75 \text{ mm}]\}$$

$$P1 + P2 \leq (ST/2)$$

P1 does not necessarily equal P2

With the top or exterior pocket flange datum, the sum of the thickness of the skirt L2 and the final tube length, if sealing from the exterior, preferably is not be greater than one half the substrate thickness. This helps ensure that the tube does not extend outwardly from an outermost surface of the VIG unit. Thus, in certain example embodiments:

$$L2 + 0.75 \leq (ST/2), \ L2 + 0.75 = P1$$

With the bottom or interior pocket flange datum, the total tube length L4 preferably is no greater than the substrate thickness plus 0.75 mm, and the depth of the pocket P1 preferably is equal to 0.75 mm at a minimum. The flange thickness falling within the range given above, maintaining the one-half substrate thickness or less, allows for up to 0.200 mm sealing frit material if bonded on diameter to pocket (see Fig. 8). Thus, in certain example embodiments:

$$(ST - 0.200 \text{ mm}) \leq L4 \leq ST + 0.75 \text{ mm}$$

$$P1 \geq 0.75 \text{ mm}$$

$$P2 + P1 \leq ST/2$$

$$P2 = (ST/2) - P1 - 0.200$$

$$P2 = L2 + 0.200$$

The flange diameter or distance preferably is at least 1 mm greater than the exterior tube end diameter or distance, and at least 2 mm smaller than the pocket diameter or distance in which the flange is placed. This advantageously allows space for excess material and/or for the edge of flange to be sealed to the substrate.

In certain example embodiments, the tube end outer diameter or distance preferably is no greater than 2 mm larger than the inner tube end diameter. This arrangement advantageously enables the tube to be tipped off efficiently using a laser. Thus, in certain example embodiments:

$$D3 - D2 \geq 1.00 \text{ mm}$$

$$D3 \leq (DP1 \text{ or } DP2 - 2.00 \text{ mm}),$$

DP1 or DP2 depending on pocket of insertion.

$$D2 - D1 \leq 2.00 \text{ mm}$$

$$D1 \geq 0.50 \text{ mm}$$

Where a thermal conduction break is advantageous (e.g., see Figs. 9-10), the through-hole diameter or distance THD preferably is involved in the following: DP2 = D3 + [(THD - D2)/2]. THD preferably includes values between D2 up to the D3 dimension, where the difference between THD and D2 ranges between 0 and up to D3 value.

In certain example embodiments, the length of the tube end is determined by the volume of material required to seal the same thickness of material on the tube end as the tube wall diameter.

Fig. 6 is a cross-sectional schematic view demonstrating a first way in which a flanged pump-out tube 40 can be provided to a VIG unit subassembly to be sealed, in accordance with certain example embodiments. The Fig. 6 example VIG unit subassembly includes first and second substrates 60a and 60b, with a gap 62 therebetween that is to be evacuated to a pressure less than atmospheric. The second substrate 60b includes a recess 64 that can accommodate a getter material or the like, however, this need not be provided in different example embodiments. In brief, the VIG unit subassembly shows the tube 40 with a datum from the exterior pocket surface of the pocket 66 formed in the first substrate 60a, with no additional pocket being formed on the interior surface of the first subsrate 60a.

The flanged tube 66 is substantially internal to the VIG unit subassembly of Fig. 6 and in essence sits in a pocket 66 drilled or otherwise formed in the first substrate 60a. The tube 66 is held in place using frit 68, which is provided around the outmost flange 42 (and optionally between the flange's lower surface and an upper surface of the pocket 66) and may be fired as per conventional approaches. However, the tube 40 itself does not protrude beyond the outer surface of the first substrate 60a once it is sealed, as the tube 40 is tipped off, causing the sidewall(s) thereof to collapse inwardly and drop below an outermost surface of the substrate 60a if it is not already seated therebelow. That is, in certain example embodiments, the unsealed tube 40 may protrude beyond an exterior major surface of the first substrate 60a and may not once it is sealed. In different example embodiments, the unsealed tube 40 will not protrude beyond the exterior major surface of the first substrate 60a before and after it is sealed.

The pocket 66 in which the skirt 42 of the tube 40 sits is advantageous because it allows more tube material to be exposed and used in forming the seal. The port in which the lower portion of the tube 40 is to sit may be formed by drilling a through-hole of a first diameter or major distance, and the pocket 66 may be formed by drilling a recess in the substrate proximate to the through-hole. This pocket or recess 66 is not a through-hole, otherwise it merely would serve as a larger (or supplementary) pump-out port. The through-hole and the recess may be formed in registration with one another, e.g., so that the approximate centers of each are substantially aligned (e.g., from plan view and/or cross-sectional perspectives, the latter of which can be appreciated from Fig. 6). The through-hole and the recess may be substantially circular in plan view in certain example embodiments, although other configurations are possible in different example embodiments.

The VIG unit subassembly shown in Fig. 6 is evacuated through the tube 40, which open to the interior air space or cavity, using a vacuum. A vacuum cup similar to that shown in Fig. 3 may be used in certain example embodiments, but it need not be used in all embodiments (e.g., in embodiments where the entire subassembly is processed in vacuum conditions). When sufficiently low pressure is reached, a laser or the like is used to seal the tube 40. The laser may be directed from the same side of the substrate as the side to be tipped off in certain example embodiments. This may promote sagging of the melted tube material until it eventually covers over the hole. In other words, laser exposure to the sidewall of the tube 40 will cause the side wall of the tube 40 to begin to sag inwardly. The laser may trace the sag as a bridge begins to form, hermetically sealing the tube 40.

In certain example embodiments, the glass substrate 60a preferably is sufficiently transparent to the wavelength of the laser so as avoid absorbing a significant amount of energy. The tube 40, by contrast, preferably is sufficiently opaque to that wavelength to absorb the energy and form the seal. In this sense, the tube 40 may be heated preferentially (e.g., compared to the first substrate 60a and/or the second substrate 60b) in certain example embodiments. Moreover, the portions of the tube 40 to be melted may be heated preferentially compared to the skirt 42, which also may be more transparent to the wavelength of the laser than that portion to be melted.

Additionally, in certain example embodiments, the heating may be preferential heating that includes a first or core heating phase to substantially melt the tube (or sealing sidewall(s)), followed by a second phase that causes tube (or sealing sidewall(s)) to sag together and form the bridge. One or both of these phases may preferentially heat the tube (or sealing sidewall(s)) relative to the rest of the VIG unit subassembly including, for example, the overlying substrate. Laser heating may be used for either or both phases in different example embodiments. Although laser heating is mentioned herein, it will be appreciated that infrared (IR) heating may be used in connection with any heating procedure described herein. Preferential heating may be accomplished by ensuring that the composition of the tube and the glass substrates differ. The composition of the tube may be uniform or varied in different example embodiments. For example, the tube (or portions thereof) may have a higher iron content compared to the glass, e.g., so that the glass is less likely to absorb laser or other radiation. Additionally, or in the alternative, the skirt of the flanged tube may include a higher or lower iron content compared to other parts of the flanged tube. In certain example embodiments, the glass and the skirt will have the same or substantially the same absorption, and the part of the tube to be tipped off will have a higher absorption (e.g., based on differing iron contents).

Fig. 7 is a cross-sectional schematic view showing the Fig. 6 example VIG unit subassembly sealed in accordance with certain example embodiments. Fig. 7 thus shows the sealed tube 40' including the bridge portion 44, which covers the pump-out port and helps provide a hermetic seal so that the cavity 62 can remain at vacuum. The bridge portion 44 protrudes no further than the outermost surface of the first substrate 60a.

Fig. 8 is a cross-sectional schematic view demonstrating a second way in which a flanged pump-out tube can be provided to a VIG unit subassembly to be sealed, in accordance with certain example embodiments. The Fig. 8 example shows a T-shaped flanged tube 40a provided to the substrate 42, which is the same example type of substrate shown in and described above in connection with Fig. 4. That is, the substrate 42 here includes upper and lower pockets 54a and 54b, and the tube 40a here is located from the interior pocket 54b surface. The sealing frit 68 is provided between an upper surface of the skirt of the flanged tube 40a and a surface of the interior or lower pocket 54b.

It will be appreciated that the basic flanged tube design shown in and described in connection with Fig. 8 need not be used with a substrate having both upper and lower pockets 54a and 54b.

The machined pocket in the substrate that accommodates the flanged tube can be expanded to allow for insertion of a getter around the sealing tube, in certain example embodiments. For example, expansion areas can be provided around where the frit is to be provided. These expansion areas can be separately defined recesses in different example embodiments.

In certain example embodiments, the tube and sealing frit can be installed pre-tempering for construction of tempered VIG units. The sealing frit may be fired during the tempering process, which may allow for higher melting point frits to be used in obtaining a hermetic seal.

A profile / cross-section may be formed by creating a through-hole, and one or more channels or grooves around the through-hole, thereby defining the recess(es) or pocket(s). These features may be formed in any suitable manner such as, for example, by drilling into a substrate.

When viewed in cross-section, the recess(es) may be generally U-shaped, semi-circular, trapezoidal, and/or the like. Successive drilling operations may be performed to approximate these and/or other shapes, as well, e.g., in a more stepped manner.

When viewed in plan view, generally circular, ovular, square, rectangular, and/or other features may be used for the through-hole and/or recess in different example embodiments. For instance, generally square-shaped, ovular, and/or other configurations, when viewed from a plan view, may be used in different example embodiments. It also will be appreciated that differently shaped features may be used in connection with a single embodiment. For instance, when viewed from a plan view, an example embodiment may include a generally circular through-hole and a groove, channel, or recess that at its outer extent is generally square shaped, rectangular, etc. Similarly, when viewed from a plan view, an example embodiment may include a generally rectangular or square-shaped through-hole and a groove, channel, or recess that at its outer extent is generally circular, ovular, etc.

The techniques of U.S. Patent No. 9,371,683 may be used to seal the flanged tube, e.g., by tracing smaller and smaller circles or other connected patterns around the tube proximate to the sidewall(s) / sealing arm(s) so as to cause opposing edges of the sidewall(s) / sealing arm(s) to sag towards one another and form a bridge. In cases where multiple separate sidewalls / sealing arms are provided, progressive scans of narrower width may be used to similar effect. For instance, one or more lasers may be used to scan along first and second upwardly projecting sealing arms to cause them to sag towards one another. The laser(s) may be focused along scan lines or scan areas that are increasingly close to one another, e.g., as the sag continues to develop in the formation of the bridge.

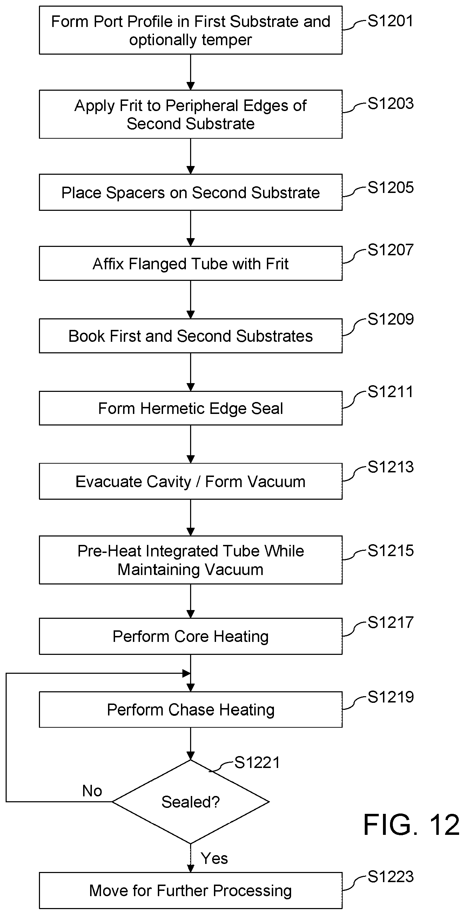

Fig. 12 is a flowchart showing an example process for making a VIG unit in connection with a flanged pump-out tube, in accordance with certain example embodiments. In step S1201, the port profile is formed in the first substrate, e.g., via one or more drilling operations or the like. That is, the through-hole and any pockets are formed in step S1201. Cutting, drilling, seaming, and/or other fabrication processes may be performed here. In step S1203, frit material is applied to peripheral edges of the second substrate. Spacers or pillars are placed on the second substrate in step S1205. The flanged tube is affixed to the first substrate in step S1207. This may include, for example, applying frit to the flanged tube before and/or after it is located with respect to the substrate. The frit may be fired at this time to hermetically seal the flanged tube to the substrates. Alternatively, if the frit and tube are able to survive heat treatment (e.g., thermal tempering), the flanged tube may be applied to an annealed substrate that has had the port profile formed therein, and the substrate may be heat treated together with the flanged tube so that the associated hermetic seal is formed together in one process.

The first and second substrates are booked together in step S1209 so that a cavity is formed therebetween, and a hermetic edge seal is formed in step S1211 (e.g., via laser heating, heating in an oven, using infrared heaters, and/or the like). The cavity is evacuated to a pressure less than atmospheric in step S1213.

The flanged tube optionally is pre-heated in step S1215, e.g., while maintaining the vacuum. This may be accomplished using an oven, using infrared heaters, via a laser, etc. Core heating is performed in step S1217, and chase heating is performed in step S1219 repeatedly until the tube is sealed (e.g., as indicated in step S1221). The core heating process of step S1217 provides the bulk of the melting process, whereas the chase heating of step S1219 is provided at progressively smaller circumferences, areas, and/or the like, e.g., depending on the configuration of the tube, sidewall(s) / sealing arm(s), the through-hole, the developing sag, etc. Once sealed, the unit may be moved for further processing in step S1223.

As will be appreciated from the above, certain example embodiments may make use of a hermetic sealing material (e.g., a metal solder) that can withstand the VIG processing temperatures and can be placed into a VIG subassembly to help seal the pump-out port from within. The solder may be sufficiently shaped to allow gasses to evacuate through the port in certain example embodiments. For instance, a solder or other preform may be applied around the outside of the flange, between the flange and the substrate, and/or elsewhere, in different example embodiments. This preform may be fired and thus used to hermetically seal the flanged tube to the substrate in certain example embodiments.

In certain example embodiments, a secondary seal may be provided proximate to the sealed flanged tube. This secondary seal may be formed form a more pliable material such as resin or the like and may help further protect the tube in some instances. The secondary seal may simply occupy any space that in an outer recess that is not covered by the bridge, e.g., such that the outer surface of the VIG unit is flush or substantially flush across its entire width.

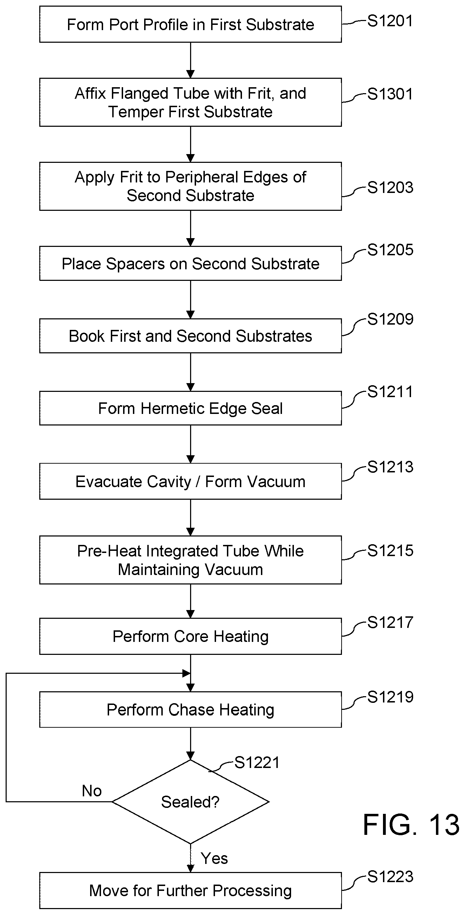

Fig. 13 is a flowchart showing another example process for making a VIG unit in connection with an internal seal, in accordance with certain example embodiments.

Fig. 13 is a flowchart showing another example process for making a VIG unit in connection with an internal seal, in accordance with certain example embodiments. Fig. 13 is similar to Fig. 12 in many respects. For example, in step S1201, the pump-out port profile is formed in the first substrate, e.g., via one or more drilling operations or the like. The flanged tube with the frit is affixed the first substrate in step S1301, using a bismuth or other suitable frit. This frit material is able to withstand heat treatment such as thermal tempering, so the affixed flanged tube and the first substrate are tempered together. After that, the steps are performed as above.

It will be appreciated that the steps in the Fig. 12 and Fig. 13 example processes may be performed in any suitable order, by different parties, and/or that further steps may be provided in different example embodiments. For instance, different parties may form the hole compared to parties who make the tube, seat the tube in the hole, seal the VIG and/or port, etc. In certain example embodiments, a tube profile will be formed in the first substrate, the first and/or second substrate may be tempered, frit may be applied to the peripheral edges of the first and/or second substrate, spacers may be placed, and then other operations may be performed, e.g., as shown in these drawings.

Any suitable laser may be used for sealing. For example, a 1064 nm wavelength laser operating at 10-30 watts, more preferably 20-30 watts may be used. With such lasers and diameters, it has been found that tubes may be sealed by firing through float glass and that about 10-30% more energy is required compared to sealing the tubes unobstructed. The increase may be provided in time and/or power in different example embodiments.

It will be appreciated that techniques disclosed herein may be used in a wide variety of applications including for example, in VIG window applications, merchandizers, laminated products, hybrid VIG units (e.g., units where a substrate is spaced apart from a VIG unit via a spacer system), etc.

The terms "heat treatment" and "heat treating" as used herein mean heating the article to a temperature sufficient to achieve thermal tempering and/or heat strengthening of the glass inclusive article. This definition includes, for example, heating a coated article in an oven or furnace at a temperature of at least about 550 degrees C, more preferably at least about 580 degrees C, more preferably at least about 600 degrees C, more preferably at least about 620 degrees C, and most preferably at least about 650 degrees C for a sufficient period to allow tempering and/or heat strengthening. This may be for at least about two minutes, or up to about 10 minutes, in certain example embodiments. These processes may be adapted to involve different times and/or temperatures.

As used herein, the terms "on," "supported by," and the like should not be interpreted to mean that two elements are directly adjacent to one another unless explicitly stated. In other words, a first layer may be said to be "on" or "supported by" a second layer, even if there are one or more layers therebetween.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of making a vacuum insulating glass (VIG) unit, the method comprising:

    having first and second glass substrates (60a, 60b), the first substrate (60a) including a hole therein, the hole having first and second portions (54a, 52), the first portion (54a) being closer to an outer surface of the first substrate (60a) than the second portion (52), the first portion (54a) having a first width (DP1) across the first substrate (60a) and the second portion (52) having a second width (THD) across the first substrate, the first width (DP1) being wider than the second width (THD), the first and second portions (54a, 52) together forming a through-hole through the first substrate (60a);
    placing in the hole a flanged pump-out tube, the flanged pump-out tube including a tube (40) having an inner diameter (D1) and an outer diameter (D2), with the walls of the tube (40) being defined therebetween, the outer diameter (D2) being narrower than the second width (THD), the flanged pump-out tube (40) including a skirt (42), the skirt (42) having a diameter (D3), the diameter (D3) being wider than the second width (TDH) and being narrower than the first width (DP1), wherein the skirt (42) is intermediate upper and lower ends of the tube (40) so that the skirt (42) is spaced a first distance (L1) from an upper end of the tube (40) and spaced a second distance (L3) from a lower end of the tube (40) with a length (L2), wherein placing the skirt (42) extends the lower portion of the tube at least partially into the second portion (52) of the hole and locates the upper portion of the tube (40) at least partially in the first portion (54a) of the hole, wherein the skirt (42) sits in the first portion (54a) of the hole, and wherein the tube is sealed in the hole using a frit;

    sealing an area proximate a periphery of the first and second substrates (60a, 60b) with an edge seal (4) provided around peripheral edges of the first and/or second substrates (60a, 60b), a cavity (62) being defined between at least the first and second substrates (60a, 60b), and a plurality of spacers (5) being provided between the first and second substrates (60a, 60b) in the cavity (62) and helping to maintain the first and second substrates (60a, 60b) in substantially parallel, spaced-apart relation to one another;
    evacuating the cavity (62) to a pressure less than atmospheric pressure; and
    heating the pump-out tube (40) so as to cause at least a part of the upper portion of the tube to collapse inwardly upon itself, covering the second width and hermetically sealing the VIG unit and forming a sealed tube (40'), the sealed tube (40') being flush with, or partially recessed with respect to, an outermost surface of the first substrate (60a).

2. The method of claim 1, wherein the first and second portions of the hole are formed by drilling.

3. The method of any preceding claim, further comprising sealing the pump-out tube to the first substrate using frit material provided to the pump-out tube and/or the first substrate.

4. The method of claim 3, wherein the frit material seals the skirt to the first substrate.

5. The method of any of claims 3-4, wherein the frit material seals outer peripheral edges of the skirt to the first substrate.

6. The method of any of claims 3-5, wherein frit material is not provided to an underside of the skirt.

7. The method of any of claims 3-6, wherein frit material is provided to the pump-out tube prior to the tube being placed in the hole.

8. The method of any preceding claim, wherein the heating is laser heating.

9. The method of claim 8, wherein the laser heating is practiced so as to preferentially heat the pump-out tube relative to the first substrate and/or the skirt.

10. The method of any of claims 8-9, wherein the laser heating includes tracing collapsing portions of the tube as the tube collapses inwardly upon itself in forming the sealed tube.

11. A vacuum insulating glass (VIG) unit made by the method of claim 1-10.

## Patentansprüche

1. Verfahren zur Herstellung einer Vakuumisolierglas-(VIG) Einheit, wobei das Verfahren umfasst:

Aufweisen eines ersten und zweiten Glassubstrats (60a, 60b), wobei das erste Substrat (60a) ein Loch darin beinhaltet, wobei das Loch einen ersten und zweiten Abschnitt (54a, 52) aufweist, wobei der erste Abschnitt (54a) näher an einer Außenoberfläche des ersten Substrats (60a) liegt als der zweite Abschnitt (52), wobei der erste Abschnitt (54a) eine erste Breite (DPI) über das erste Substrat (60a) aufweist und der zweite Abschnitt (52) eine zweite Breite (THD) über das erste Substrat aufweist, wobei die erste Breite (DPI) größer ist als die zweite Breite (THD), wobei der erste und der zweite Abschnitt (54a, 52) zusammen ein Durchgangsloch durch das erste Substrat (60a) hindurch bilden;

Platzieren eines angeflanschten Abpumprohres in dem Loch, wobei das angeflanschte Abpumprohr ein Rohr (40) beinhaltet, das einen Innendurchmesser (D1) und einen Außendurchmesser (D2) aufweist, wobei die Wände des Rohres (40) dazwischen definiert sind, wobei der Außendurchmesser (D2) schmaler ist als die zweite Breite (THD), wobei das angeflanschte Abpumprohr (40) eine Schürze (42) beinhaltet, wobei die Schürze (42) einen Durchmesser (D3) aufweist, wobei der Durchmesser (D3) breiter ist als die zweite Breite (TDH) und schmaler ist als die erste Breite (DPI), wobei die Schürze (42) zwischen dem oberen und dem unteren Ende des Rohrs (40) liegt, sodass die Schürze (42) um einen ersten Abstand (L1) von einem oberen Ende des Rohrs (40) und einen zweiten Abstand (L3) von einem unteren Ende des Rohrs (40) mit einer Länge (L2) beabstandet ist, wobei das Platzieren der Schürze (42) den unteren Abschnitt des Rohrs zumindest teilweise in den zweiten Abschnitt (52) des Lochs erstreckt und den oberen Abschnitt des Rohrs (40) zumindest teilweise im ersten Abschnitt (54a) des Lochs positioniert, wobei die Schürze (42) im ersten Abschnitt (54a) des Lochs sitzt und wobei das Rohr unter Verwendung einer Glasmasse im Loch abgedichtet ist;

Abdichten eines Bereichs in der Nähe einer Peripherie des ersten und zweiten Substrats (60a, 60b) mit einer Kantendichtung (4), die um die peripheren Kanten des ersten und/oder zweiten Substrats herum bereitgestellt ist, wobei ein Hohlraum (62) zwischen zumindest dem ersten und dem zweiten Substrat (60a, 60b) definiert ist und eine Vielzahl von Abstandshaltern (5) zwischen dem ersten und dem zweiten Substrat (60a, 60b) im Hohlraum (62) bereitgestellt sind, und dabei helfen, das erste und das zweite Substrat (60a, 60b) in einer im Wesentlichen parallelen, beabstandeten Beziehung zueinander zu halten;

Evakuieren des Hohlraums (62) auf einen Druck unterhalb des atmosphärischen Drucks; und

Erhitzen des Abpumprohres (40), um zumindest einen Teil des oberen Abschnitts des Rohres zu veranlassen, nach innen in sich zusammenzufallen, wodurch die zweite Breite abgedeckt und die VIG-Einheit hermetisch abgedichtet wird und ein abgedichtetes Rohr (40') gebildet wird, wobei das abgedichtete Rohr (40') bündig mit einer äußersten Oberfläche des ersten Substrats (60a) abschließt oder in Bezug darauf teilweise vertieft ist.

2. Verfahren nach Anspruch 1, wobei der erste und der zweite Abschnitt des Lochs durch Bohren gebildet werden.

3. Verfahren nach einem vorstehenden Anspruch, das weiter Abdichten des Abpumprohrs zum ersten Substrat hin unter Verwendung von Glasmassenmaterial umfasst, das dem Abpumprohr und/oder dem ersten Substrat bereitgestellt wird.

4. Verfahren nach Anspruch 3, wobei das Glasmassenmaterial die Schürze zum ersten Substrat hin abdichtet.

5. Verfahren nach einem der Ansprüche 3-4, wobei das Glasmassenmaterial die äußeren peripheren Kanten der Schürze zum ersten Substrat hin abdichtet.

6. Verfahren nach einem der Ansprüche 3-5, wobei einer Unterseite der Schürze kein Glasmassenmaterial bereitgestellt wird.

7. Verfahren nach einem der Ansprüche 3-6, wobei dem Abpumprohr Glasmassenmaterial bereitgestellt wird, bevor das Rohr in dem Loch platziert wird.

8. Verfahren nach einem vorstehenden Anspruch, wobei das Erhitzen Lasererhitzen ist.

9. Verfahren nach Anspruch 8, wobei das Lasererhitzen durchgeführt wird, um in Bezug auf das erste Substrat bevorzugt das Abpumprohr und/oder die Schürze zu erwärmen.

10. Verfahren nach einem der Ansprüche 8-9, wobei das Lasererhitzen Verfolgen zusammenfallender Abschnitte des Rohres beinhaltet, wenn das Rohr beim Bilden des versiegelten Rohrs nach innen in sich zusammenfällt.

**11.** Vakuumisolierglas- (VIG) Einheit, die durch das Verfahren nach Anspruch 1-10 hergestellt wird.

## Revendications

**1.** Procédé de fabrication d'une unité vitrage isolé sous vide (VIG), le procédé comprenant :

la fourniture de premier et second substrats en verre (60a, 60b), le premier substrat (60a) incluant un trou à l'intérieur de celui-ci, le trou présentant des première et seconde parties (54a, 52), la première partie (54a) étant plus proche d'une surface extérieure du premier substrat (60a) que la seconde partie (52), la première partie (54a) présentant une première largeur (DPI) à travers le premier substrat (60a) et la seconde partie (52) présentant une seconde largeur (THD) à travers le premier substrat, la première largeur (DPI) étant plus large que la seconde largeur (THD), les première et seconde parties (54a, 52) formant ensemble un trou traversant à travers le premier substrat (60a) ; le placement dans le trou d'un tube de pompage à bride, le tube de pompage à bride incluant un tube (40) présentant un diamètre intérieur (D1) et un diamètre extérieur (D2), les parois du tube (40) étant définies entre celles-ci, le diamètre extérieur (D2) étant plus étroit que la seconde largeur (THD), le tube de pompage à bride (40) incluant une jupe (42), la jupe (42) présentant un diamètre (D3), le diamètre (D3) étant plus large que la seconde largeur (TDH) et étant plus étroit que la première largeur (DPI), dans lequel la jupe (42) se situe entre les extrémités supérieure et inférieure du tube (40) de sorte que la jupe (42) soit espacée d'une première distance (L1) d'une extrémité supérieure du tube (40) et espacée d'une seconde distance (L3) d'une extrémité inférieure du tube (40) avec une longueur (L2), dans lequel le placement de la jupe (42) étend la partie inférieure du tube au moins partiellement dans la seconde partie (52) du trou et positionne la partie supérieure du tube (40) au moins partiellement dans la première partie (54a) du trou, dans lequel la jupe (42) se trouve dans la première partie (54a) du trou, et dans lequel le tube est scellé dans le trou à l'aide d'un fritté ; le scellage d'une zone à proximité d'une périphérie des premier et second substrats (60a, 60b) avec un joint de bord (4) disposé autour des bords périphériques du premier et/ou du second substrat (60a, 60b), une cavité (62) étant définie entre au moins les premier et second substrats (60a, 60b), et une pluralité d'entretoises (5) étant disposées entre les premier et second substrats (60a, 60b) dans la cavité (62) et aidant à maintenir les premier et second substrats (60a, 60b) dans une relation sensiblement parallèle et espacée l'un par rapport à l'autre ; la création de vide dans la cavité (62) jusqu'à une pression inférieure à la pression atmosphérique ; et le chauffage du tube de pompage (40) de manière à provoquer l'affaissement sur elle-même d'au moins une partie de la partie supérieure du tube vers l'intérieur, recouvrant la seconde largeur et scellant hermétiquement l'unité VIG et formant un tube scellé (40'), le tube scellé (40') étant au ras ou partiellement en retrait par rapport à une surface la plus externe du premier substrat (60a).

**2.** Procédé selon la revendication 1, dans lequel les première et seconde parties du trou sont formées par perçage.

**3.** Procédé selon une quelconque revendication précédente, comprenant en outre le scellage du tube de pompage au premier substrat à l'aide d'un matériau fritté fourni au tube de pompage et/ou au premier substrat.

**4.** Procédé selon la revendication 3, dans lequel le matériau fritté scelle la jupe au premier substrat.

**5.** Procédé selon l'une quelconque des revendications 3-4, dans lequel le matériau fritté scelle les bords périphériques extérieurs de la jupe au premier substrat.

**6.** Procédé selon l'une quelconque des revendications 3-5, dans lequel le matériau fritté n'est pas fourni sur la face inférieure de la jupe.

**7.** Procédé selon l'une quelconque des revendications 3-6, dans lequel le matériau fritté est fourni au tube de pompage avant que le tube ne soit placé dans le trou.

**8.** Procédé selon une quelconque revendication précédente, dans lequel le chauffage est un chauffage au laser.

**9.** Procédé selon la revendication 8, dans lequel le chauffage au laser est pratiqué de manière à chauffer préférentiellement le tube de pompage par rapport au premier substrat et/ou à la jupe.

**10.** Procédé selon l'une quelconque des revendications 8-9, dans lequel le chauffage au laser inclut le marquage des parties en cours d'affaissement du tube lorsque le tube s'affaisse vers l'intérieur sur lui-même lors de la formation du tube scellé.

11. Unité vitrage isolant sous vide (VIG) fabriquée par le procédé selon la revendication 1-10.

**FIG. 1**
(PRIOR ART)

**FIG. 2**
(PRIOR ART)

FIG. 3

FIG. 4

FIG. 5

FIG. 6

FIG. 7

FIG. 8

42  54a  44  40a'

68  60b  62

54b

**FIG. 9**

60a'  44  40a'

68  60b  62

54b

**FIG. 10**

42'  54a'  44  40a'

68  60b  62

54b'  **FIG. 11**

```
┌────────────────────────────────────┐
│ Form Port Profile in First Substrate│──S1201
│          and optionally temper      │
└────────────────────────────────────┘
                 │
                 ▼
┌────────────────────────────────────┐
│   Apply Frit to Peripheral Edges of │──S1203
│           Second Substrate          │
└────────────────────────────────────┘
                 │
                 ▼
┌────────────────────────────────────┐
│    Place Spacers on Second Substrate│──S1205
└────────────────────────────────────┘
                 │
                 ▼
┌────────────────────────────────────┐
│       Affix Flanged Tube with Frit  │──S1207
└────────────────────────────────────┘
                 │
                 ▼
┌────────────────────────────────────┐
│     Book First and Second Substrates│──S1209
└────────────────────────────────────┘
                 │
                 ▼
┌────────────────────────────────────┐
│        Form Hermetic Edge Seal      │──S1211
└────────────────────────────────────┘
                 │
                 ▼
┌────────────────────────────────────┐
│     Evacuate Cavity / Form Vacuum   │──S1213
└────────────────────────────────────┘
                 │
                 ▼
┌────────────────────────────────────┐
│    Pre-Heat Integrated Tube While   │──S1215
│          Maintaining Vacuum         │
└────────────────────────────────────┘
                 │
                 ▼
┌────────────────────────────────────┐
│         Perform Core Heating        │──S1217
└────────────────────────────────────┘
                 │
                 ▼
┌────────────────────────────────────┐
│        Perform Chase Heating        │──S1219
└────────────────────────────────────┘
                 │
                 ▼
         ◇ Sealed? ◇ ──S1221   No ──┐
                 │ Yes
                 ▼
┌────────────────────────────────────┐
│      Move for Further Processing    │──S1223
└────────────────────────────────────┘
```

FIG. 12

Form Port Profile in First Substrate —S1201

Affix Flanged Tube with Frit, and Temper First Substrate —S1301

Apply Frit to Peripheral Edges of Second Substrate —S1203

Place Spacers on Second Substrate —S1205

Book First and Second Substrates —S1209

Form Hermetic Edge Seal —S1211

Evacuate Cavity / Form Vacuum —S1213

Pre-Heat Integrated Tube While Maintaining Vacuum —S1215

Perform Core Heating —S1217

Perform Chase Heating —S1219

S1221
Sealed?
No
Yes

Move for Further Processing —S1223

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657607 A
- US 5664395 A
- US 5902652 A
- US 6506472 B
- US 6383580 B
- US 9371683 B
- US 8833105 B

- US 20130306222 A
- EP 3363982 A1
- US 10125045 B
- US 9988302 B
- US 9593527 B
- US 9428952 B
- US 9309146 B